# NEUE EUROPÄISCHE PATENTSCHRIFT

(11) **EP 3 294 580 B2**
(45) Veröffentlichungstag und Bekanntmachung des Hinweises auf die Entscheidung über den Einspruch: **26.10.2022**
(45) Hinweis auf die Patenterteilung: 27.02.2019
(21) Anmeldenummer: 16722228.0
(22) Anmeldetag: 12.05.2016
(51) Int. Cl.: B60J 7/00, B60J 1/20, F16C 33/04

(54) **ANORDNUNG FÜR EIN WICKELSYSTEM UND WICKELSYSTEM FÜR EIN FAHRZEUGDACH**
ARRANGEMENT FOR A WINDING SYSTEM AND WINDING SYSTEM FOR A VEHICLE ROOF
DISPOSITIF POUR SYSTÈME D'ENROULEMENT ET SYSTÈME D'ENROULEMENT POUR TOIT DE VÉHICULE

(30) Priorität: 13.05.2015 DE 102015107573
(43) Veröffentlichungstag der Anmeldung: 21.03.2018
(73) Patentinhaber: Webasto SE, 82131 Stockdorf (DE)
(72) Erfinder: KUGLER, Stephan, 82131 Stockdorf (DE); SICHART, Thomas, 82131 Stockdorf (DE)
(74) Vertreter: Epping - Hermann - Fischer
(86) Internationale Anmeldenummer: PCT/EP2016/060723
(87) Internationale Veröffentlichungsnummer: WO 2016/180932

(56) Entgegenhaltungen:
- FR-A1- 2 873 955
- US-A- 4 222 601
- US-A1- 2007 051 478

## Beschreibung

Die vorliegende Erfindung betrifft ein Rollosystem für ein Fahrzeugdach, umfassend eine Anordnung und das Fahrzeugdach für ein Kraftfahrzeug, welches dazu geeignet sind, auf einfache Weise ein zuverlässiges Auf- und/oder Abwickeln eines Rollos zu ermöglichen.

Derartige Anordnungen sind aus dem Stand der Technik bekannt, beispielsweise aus der US 4 222 601 A und der FR 2 873 955. Üblicherweise wird mittels eines Wickelsystems zum Beispiel ein flexibles Element auf- und/oder abgewickelt, um unter anderem ein Dachfenster in einem Fahrzeugdach zu verdunkeln oder freizugeben. Dabei ist häufig das flexible Element ein Rollo eines Rollosystems, bei dem eine Aufwickelfunktion beispielsweise mittels eines Schafts, Drehfedern und Lagerbuchsen realisiert ist. Diese Komponenten sind üblicherweise drehbar um eine Längsachse des Rollosystems angeordnet.
Anmelderseitig sind zumindest firmeninterne Anordnungen bekannt, bei denen es bei einer Rotation zu einer Verschiebung oder einem Wandern der Lagerbuchsen kommen kann, da diese in Bezug auf die Längsachse nicht zuverlässig positioniert sind. Ein solches Wandern der Lagerbuchsen wirkt sich unter anderem nachteilig auf das Aufwickelverhalten des Rollo- oder Wickelsystems aus. Darüber hinaus resultiert aus einer fehlenden Verspannung der miteinander zusammenwirkenden Komponenten ein Klapperpotential, welches eine unerwünschte Geräuschentwicklung ermöglicht und dadurch die Wertigkeit des Wickelsystems mindert.

Der Erfindung liegt daher die Aufgabe zugrunde, ein Rollosystem für ein Fahrzeugdach zu schaffen, das dazu geeignet ist, ein verbessertes Auf- und/oder Abwickeln eines Rollos zu ermöglichen.

Die Aufgabe wird durch die Merkmale der unabhängigen Patentansprüche gelöst.

Ein erfindungsgemäßes Rollosystem für ein Fahrzeugdach umfasst eine Anordnung und das Fahrzeugdach eines Kraftfahrzeugs. Das Rollosystem ist ausgebildet zum Anordnen in einem hinteren Bereich des Kraftfahrzeugs, um ein in dem Fahrzeugdach integriertes Dachfenster auf Wunsch zu verdunkeln und wieder freizugeben. Die Anordnung umfasst eine Welle, die eine Ausnehmung und eine Längsachse aufweist, um die sie drehbar ausgebildet ist, und eine Lagerbuchse, die eine Kontaktfläche aufweist und die um die Längsachse drehbar in der Ausnehmung der Welle angeordnet und mit der Welle gekoppelt ist. Die Anordnung umfasst weiter ein Lagerelement, das eine Kontaktfläche aufweist und das beabstandet zu der Lagerbuchse in der Ausnehmung der Welle angeordnet ist, und ein Gleitelement, das eine erste und eine zweite Kontaktfläche aufweist und das zwischen der Lagerbuchse und dem Lagerelement in der Ausnehmung der Welle angeordnet ist. Außerdem umfasst die Anordnung ein Antriebselement, das drehbar um die Längsachse in der Ausnehmung der Welle angeordnet und mit der Lagerbuchse gekoppelt ist und das derart ausgebildet ist, mittels der Welle ein Rollo auf-und/oder abzuwickeln, wobei das Antriebselement eine Kraft auf die Lagerbuchse in Richtung des Lagerelements ausübt, sodass sich die Kontaktfläche der Lagerbuchse und die erste Kontaktfläche des Gleitelements sowie die zweite Kontaktfläche des Gleitelements und die Kontaktfläche des Lagerelements kontaktieren.

Auf diese Weise wird eine Anordnung für ein Wickelsystem realisiert, die ein zuverlässiges Auf- und/oder Abwickeln des flexiblen Elements ermöglicht. Beispielsweise ist das flexible Element ein Rollo und das zugehörige Wickelsystem ein Rollosystem, das insbesondere mittels der Welle und des Antriebselements ein Auf- und/oder Abwickeln des Rollos ermöglicht.

Dadurch, dass das Antriebselement eine Kraft auf die Lagerbuchse in Richtung des Lagerelements ausübt, sind die Lagerbuchse, das Gleitelement und das Lagerelement im Wesentlichen in ihrer Position relativ zueinander und in Bezug auf die Längsachse fixiert. Mittels der jeweiligen Kontaktflächen liegen die erwähnten Komponenten aneinander an und es wird auch in einem Betrieb der Anordnung oder des zugehörigen Wickelsystems die Position der zusammenwirkenden Komponenten entlang der Längsachse im Wesentlichen aufrechterhalten. Das Antriebselement realisiert somit eine zuverlässige Kopplung zwischen der Lagerbuchse und dem Lagerelement. Auf diese Weise wird unter anderem ein Verschieben der Lagerbuchse während einer Rotation verhindert oder zumindest entgegengewirkt und so ein verbessertes Auf- und/oder Abwickelverhalten des Wickelsystems realisiert. Zudem ermöglicht die beschriebene Anordnung einen verbesserten Lauf und eine verbesserte Leichtgängigkeit des Wickelsystems im Vergleich zu Anordnungen, bei denen die beschriebenen Komponenten nicht gegeneinander verspannt sind.

Mittels Verspannen der jeweiligen Komponenten wird darüber hinaus ein robustes Design der Anordnung realisiert, das auch ein Klapperpotential der zusammenwirkenden Komponenten während eines Betriebs der Anordnung reduziert. Ein reduziertes Klapperpotential führt zu einer verminderten Geräuschentwicklung und wirkt sich vorteilhaft auf die Qualität der Anordnung oder eines zugehörigen Wickelsystems aus, welches eine solche Anordnung umfasst.

Damit ein Anliegen oder Verspannen der erwähnten Komponenten auch während des Betriebs der Anordnung möglich ist und die Lagerbuchse relativ zum Lagerelement rotieren kann, ist das Gleitelement als zusätzliches Element zwischen der Lagerbuchse und dem Lagerelement angeordnet. Das Gleitelement ermöglicht eine im Wesentlichen dauerhafte Kopplung zwischen der Lagerbuchse und dem Lagerelement insbesondere während eines Auf- und/oder Abwickelns des flexiblen Elements.

Das Gleitelement weist zum Beispiel Materialeigenschaften und Oberflächenbeschaffenheit auf, die einerseits eine zuverlässige Rotation der Lagerbuchse und andererseits eine sichere Kopplung zwischen Lagerbuchse und Lagerelement ermöglichen. Gleitelement und Lagerelement sind zum Beispiel im Gegensatz zur Welle, zur Lagerbuchse und zum Antriebselement nicht drehbar angeordnet oder ausgebildet und repräsentieren in Bezug auf einen Betrieb der Anordnung im Wesentlichen stehende Komponenten.

Gemäß einer Weiterbildung der Anordnung weist die Lagerbuchse eine Ausnehmung auf, in der das Gleitelement angeordnet ist.

Beispielsweise ist das Gleitelement in der Ausnehmung der Lagerbuchse derart angeordnet, das sie einen Teil einer Wandung der Lagerbuchse kontaktiert und von der Lagerbuchse wie von einer Art Bund umgeben ist. Der Teil der Wandung realisiert die Kontaktfläche der Lagerbuchse und steht beispielsweise in formschlüssigem Kontakt mit der ersten Kontaktfläche des Gleitelements.

Dadurch, dass das Gleitelement innerhalb der Ausnehmung der Lagerbuchse angeordnet ist, ist eine kompakte Anordnung für ein Wickelsystem realisierbar, welche zudem ein zuverlässiges und geräuscharmes Auf- und/oder Abwickeln des flexiblen Elements ermöglicht.

Gemäß einer Weiterbildung der Anordnung ist das Antriebselement zwischen dem Lagerelement und einer Wandung der Welle angeordnet und übt eine Zugkraft auf die Lagerbuchse aus.

Das Antriebselement ist zum Beispiel als Schraubenfeder realisiert und auf einer Seite der Lagerbuchse angeordnet, die dem Gleitelement zugewandt ist. Die Schraubenfeder ist beispielsweise mit der Lagerbuchse gekoppelt und zieht die Lagerbuchse in Richtung des Lagerelements. Auf diese Weise wird die Lagerbuchse gegen das Gleitelement und das Gleitelement gegen das Lagerelement verspannt. Somit ist eine Anordnung realisierbar, die auf einfache Weise eine Kopplung der Lagerbuchse mit dem Lagerelement ermöglicht und die Position der Lagerbuchse bezüglich der Längsachse fixiert.

Alternativ zu der beschriebenen Weiterbildung ist das Antriebselement beispielsweise auf einer zu dem Gleitelement gegenüberliegenden Seite der Lagerbuchse in der Ausnehmung der Welle angeordnet und übt eine Druckkraft auf die Lagerbuchse in Richtung des Lagerelements aus. Das Antriebselement presst dann zum Beispiel die Lagerbuchse gegen das Gleitelement und infolgedessen das Gleitelement gegen das Lagerelement.

Gemäß einer weiteren Weiterbildung der Anordnung weist das Antriebselement einen Federarm auf, der mit der Lagerbuchse gekoppelt ist, und mittels dessen eine Zugkraft auf die Lagerbuchse ausgeübt wird.

Diese Weiterbildung der Anordnung gibt eine Möglichkeit des Ausbildens des Antriebselements an, bei der eine Kopplung zwischen Antriebselement und Lagerbuchse mittels des Federarms realisiert ist. Ist das Antriebselement beispielsweise als Schraubenfeder ausgeführt, so realisiert sie zum einen ein Auf- und/oder Abwickeln des flexiblen Elements mittels der Welle und zum anderen eine Zugkraft auf die Lagerbuchse in Richtung des Lagerelements mittels des Federarms. Die Schraubenfeder ist dann zum Beispiel als kombinierte Zug- und Drehfeder ausgebildet und ermöglicht so auf einfache Weise ein Verspannen der zusammenwirkenden Komponenten und dadurch ein verbessertes Wickelverhalten der Anordnung mit verringerter Geräuschentwicklung aufgrund des reduzierten Klapperpotentials.

Der Federarm erstreckt sich zum Beispiel zwischen der Wandung der Welle und der Lagerbuchse und greift an einer vorgegebenen Position an eine dazu ausgebildete Kontur oder Ausnehmung der Lagerbuchse ein. Der Federarm des Antriebselements realisiert so eine form- und/oder kraftschlüssige Kopplung mit der Lagerbuchse und infolgedessen eine Kopplung der Lagerbuchse mit dem Gleitelement und dem Lagerelement.

Gemäß einer Weiterbildung der Anordnung ist das Gleitelement scheibenförmig ausgebildet.

Das Gleitelement ist beispielsweise als Gleitscheibe realisiert und ermöglicht somit zum Beispiel eine rotationssymmetrische Ausbildung der beschriebenen Anordnung für ein Wickelsystem, die insbesondere in Bezug auf ein Auf- und/oder Abwickeln des flexiblen Elements nutzbringend ist.

Gemäß einer Weiterbildung der Anordnung weist die Anordnung einen Lagerzapfen auf, der zur Kopplung der Anordnung mit einem Kraftfahrzeug ausgebildet ist und der sich von außerhalb der Welle in die Ausnehmung der Lagerbuchse und die Ausnehmung der Welle erstreckt.

Diese Weiterbildung der Anordnung stellt eine Möglichkeit der Kopplung mit einem Kraftfahrzeug dar. Beispielsweise ist ein Wickelsystem, das eine Ausbildung der Anordnung aufweist, mittels des Lagerzapfens an einer Innenseite eines Fahrzeugdachs des Kraftfahrzeugs angebracht und ermöglicht so ein zuverlässiges Verdunkeln oder Freigeben eines in dem Fahrzeugdach integrierten Dachfensters.

In Bezug auf eine symmetrische Ausbildung des Wickelsystems ist es vorteilhaft, dass an beiden Enden der Welle jeweils ein Lagerzapfen, eine Lagerbuchse und ein Gleitelement angeordnet sind, die jeweils einem Ende des Lagerelements zugeordnet sind. Das Antriebselement kann zum Beispiel als ein einzelnes Element ausgebildet sein, das an beiden Enden jeweils einen Federarm aufweist, oder es sind auch zwei Antriebselemente vorgesehen, die eine zuverlässige Kopplung der jeweiligen Lagerbuchse mit dem Lagerelement realisieren. Aber auch von dem Lagerelement kann mehr als eines vorhanden sein, sodass beispielsweise jeweils ein Lagerelement einer Seite des Wickelsystems zugeordnet ist und ein betriebsbereites Wickelsystem zum Beispiel zwei der beschriebenen Ausbildungen der Anordnung umfasst.

Gemäß einer Weiterbildung der Anordnung weisen das Gleitelement und das Lagerelement jeweils eine Ausnehmung auf und der Lagerzapfen erstreckt sich durch die Ausnehmung der Lagerbuchse und durch die Ausnehmung des Gleitelements in die Ausnehmung des Lagerelements und koppelt mit diesem.

Der Lagerzapfen weist zum Beispiel eine stiftförmige Struktur auf, die sich durch die Ausnehmung der Lagerbuchse und des Gleitelements hindurch in die Ausnehmung des Lagerelements erstreckt. Die stiftförmige Struktur des Lagerzapfens ist beispielsweise in die Ausnehmung des Lagerelements hineingepresst und realisiert eine form- und/oder kraftschlüssig Kopplung mit dem Lagerelement. Darüber hinaus bestehen auch noch weitere alternative oder zusätzliche Möglichkeiten der Kopplung zwischen Lagerzapfen und Lagerelement, sodass ein zuverlässiges und stabiles Wickelsystem ermöglicht wird.

Ein erfindungsgemäßes Wickelsystem für ein Fahrzeugdach umfasst eine der zuvor beschriebenen Anordnungen und das Fahrzeugdach eines Kraftfahrzeugs. Die in Bezug auf die Anordnung beschriebenen Eigenschaften und Vorteile gelten auch für das Wickelsystem, welches zumindest eine Anordnung umfasst.

Ausführungsbeispiele der Erfindung sind im Folgenden anhand der schematischen Zeichnungen näher erläutert. Es zeigen:
- Figur 1: ein Ausführungsbeispiel eines Wickelsystems für ein Fahrzeugdach,
- Figur 2: ein Ausführungsbeispiel einer Anordnung für ein Wickelsystem,
- Figur 3: ein weiteres Ausführungsbeispiel einer Anordnung für ein Wickelsystem,
- Figur 4: ein weiteres Ausführungsbeispiel einer Anordnung für ein Wickelsystem.

Elemente gleicher Konstruktion und Funktion sind figurenübergreifend mit den gleichen Bezugszeichen gekennzeichnet.

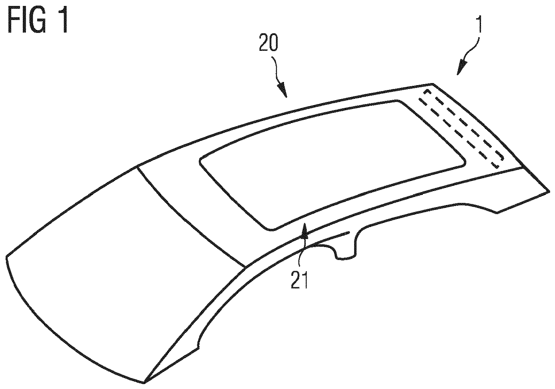

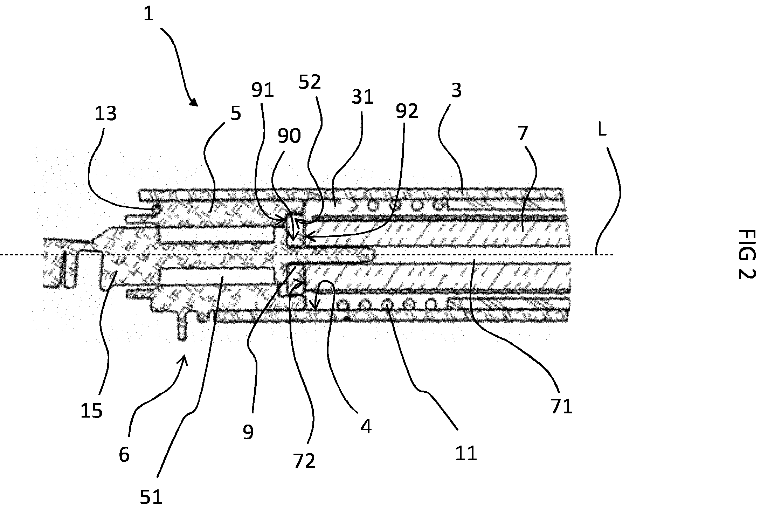

Figur 1 zeigt schematisch ein Wickelsystem für ein Fahrzeugdach 20 eines Kraftfahrzeugs in einer perspektivischen Ansicht. Das Wickelsystem umfasst eine Anordnung 1, die dazu geeignet ist, auf einfache Weise ein zuverlässiges Auf- und/oder Abwickeln eines flexiblen Elements zu ermöglichen. Beispielsweise ist das flexible Element ein Rollo und das Wickelsystem ein Rollosystem, welches, wie in Figur 1 dargestellt, in einem hinteren Bereich des Kraftfahrzeugs angeordnet ist, um ein in dem Fahrzeugdach 20 integriertes Dachfenster 21 auf Wunsch zu verdunkeln und wieder freizugeben. Ausgestaltungen der Anordnung 1, die das Wickelsystem zu einem zuverlässigen Auf- und/oder Abwickeln des Rollos befähigen, werden nachfolgend anhand der Figuren 2 bis 4 näher beschrieben.

Figur 2 zeigt in einer Schnittdarstellung ein Ausführungsbeispiel der Anordnung 1 für ein Wickelsystem, welche eine Welle 3 und eine Lagerbuchse 5 umfasst. Die Lagerbuchse 5 weist eine Kontaktfläche 52 und eine Ausnehmung 51 auf und ist in einer Ausnehmung 31 der Welle 3 angeordnet und mittels einer vorragenden Struktur 6 mit der Welle 3 gekoppelt. Die Welle 3 und die Lagerbuchse 5 sind drehbar um eine Längsachse L ausgebildet. Die Anordnung 1 umfasst weiter ein Lagerelement 7, das eine Kontaktfläche 72 aufweist und das beabstandet zu der Lagerbuchse 5 in der Ausnehmung 31 der Welle 3 angeordnet ist. Außerdem weist die Anordnung 1 ein Gleitelement 9 auf, das eine erste Kontaktfläche 91 und eine zweite Kontaktfläche 92 aufweist und das zwischen der Lagerbuchse 5 und dem Lagerelement 7 in der Ausnehmung 31 der Welle 3 angeordnet ist.

Die Anordnung 1 umfasst weiter eine als Antriebselement 11 dienende Schraubenfeder, das drehbar um die Längsachse L in der Ausnehmung 31 der Welle 3 angeordnet und das an einem Ende mittels eines Federarms 13 mit der Lagerbuchse 5 gekoppelt ist. Die Schraubenfeder 11 ist derart ausgebildet, mittels der Lagerbuchse 5 und der Welle 3 ein flexibles Element auf- und/oder abzuwickeln, wobei die Schraubenfeder 11 eine Kraft auf die Lagerbuchse 5 in Richtung des Lagerelements 7 ausübt, sodass sich die Kontaktfläche 52 der Lagerbuchse 5 und die erste Kontaktfläche 91 des Gleitelements 9 sowie die zweite Kontaktfläche 92 des Gleitelements 9 und die Kontaktfläche 72 des Lagerelements 7 kontaktieren.

Auf diese Weise ist durch die Anordnung 1 ein Wickelsystem realisiert, das ein zuverlässiges Auf- und/oder Abwickeln des flexiblen Elements mit verbessertem Wickelverhalten ermöglicht, da die zusammenwirkenden Komponenten mittels der Schraubenfeder 11 gegeneinander verspannt sind. Dadurch, dass die Schraubenfeder 11 eine Kraft auf die Lagerbuchse 5 in Richtung des Lagerelements 7 ausübt, sind die Lagerbuchse 5, das Gleitelement 9 und das Lagerelement 7 im Wesentlichen in ihrer Position relativ zueinander und in Bezug auf die Längsachse L fixiert. Mittels der jeweiligen Kontaktflächen 52 und 91 sowie 92 und 72 liegen die erwähnten Komponenten aneinander an. Ein solches Anliegen der Lagerbuchse 5 und des Gleitelements 9 einerseits und des Gleitelements 9 und des Lagerelements 7 andererseits ermöglicht einen zuverlässigen Betrieb der Anordnung 1 und des zugehörigen Wickelsystems, da die Position der zusammenwirkenden Komponenten entlang der Längsachse L im Wesentlichen aufrechterhalten wird. Dies resultiert unter anderem in einem verbesserten Wickelverhalten der Anordnung 1.

Die Schraubenfeder 11 übt aufgrund der Kopplung mit der Lagerbuchse 5 mittels des Federarms 13 eine Zugkraft auf die Lagerbuchse 5 aus. Darüber hinaus wirkt die Schraubenfeder 11 wie eine Drehfeder und ermöglicht im Zusammenwirken mit der Lagerbuchse 5 und der Welle 3 ein Auf- und/oder Abwickeln des flexiblen Elements. Somit hat die Schraubenfeder 11 eine Funktion einer kombinierten Zug- und Drehfeder und hält die Lagerbuchse 5, das Gleitelement 9 und das Lagerelement 7 auf einfache Weise unter mechanischer Spannung.

Der Federarm 13 erstreckt sich zwischen der Wandung der Welle 3 und der Lagerbuchse 5 und greift an einer vorgegebenen Position in eine Nut, die an einer Außenkontur der Lagerbuchse 5 ausgebildet ist. Infolgedessen wird mittels der Schraubenfeder 11 eine zuverlässige Kopplung der Lagerbuchse 5 mit dem Gleitelement 9 und dem Lagerelement 7 ausgebildet. Alternativ oder zusätzlich kann die Lagerbuchse 5 eine Ausnehmung an der Außenkontur aufweisen, in die der Federarm 13 der Schraubenfeder 11 eingreift und so eine form- und/oder kraftschlüssige Kopplung mit der Lagerbuchse 5 realisiert.

Auf diese Weise wird ein Verschieben der Lagerbuchse 5 während einer Rotation der Welle 3 verhindert oder zumindest entgegengewirkt und so ein verbessertes Auf- und/oder Abwickelverhalten des Wickelsystems realisiert. Zudem ermöglicht die beschriebene Anordnung 1 einen verbesserten Lauf und eine verbesserte Leichtgängigkeit des Wickelsystems im Vergleich zu Anordnungen, bei denen die beschriebenen Komponenten nicht gegeneinander verspannt sind.

Mittels Verspannen der jeweiligen Komponenten wird außerdem ein robustes Design der Anordnung 1 und ein vermindertes Klapperpotential der zusammenwirkenden Komponenten während eines Betriebs der Anordnung 1 realisiert. Dadurch wird eine Geräuschentwicklung vermindert und eine Wertigkeit der Anordnung 1 und des Wickelsystems erhöht.

Das Gleitelement 9 ist in diesem Ausführungsbeispiel scheibenförmig ausgebildet und kann auch als Gleitscheibe bezeichnet werden. Sie ermöglicht als zusätzliches Element zwischen der Lagerbuchse 5 und dem Lagerelement 7 eine Rotation auch bei gegeneinander verspannten Komponenten. Das Gleitelement 9 weist zum Beispiel Materialeigenschaften und eine Oberflächenbeschaffenheit auf, die im Zusammenwirken mit der Schraubenfeder 11 einerseits eine zuverlässige Rotation der Lagerbuchse 5 und der Welle 3 und andererseits eine sichere Kopplung zwischen Lagerbuchse 5 und Lagerelement 7 ermöglichen.

Das Gleitelement 9 ist in der Ausnehmung 51 der Lagerbuchse 5 angeordnet und von dieser umgeben. Der Teil der Wandung der Lagerbuchse 5, der die Kontaktfläche 52 zu dem Gleitelement 9 realisiert, ist in dieser Ausgestaltung der Anordnung 1 stufenförmig ausgebildet und kontaktiert die Gleitscheibe 9 an einer kreisförmigen Vorderseite und an der Außenwand, welche zusammen die erste Kontaktfläche 91 der Gleitscheibe 9 realisieren. Auf einer der Lagerbuchse 5 abgewandten Rückseite des Gleitelements 9 kontaktiert die kreisförmige zweite Kontaktfläche 92 die im Wesentlichen ebenfalls kreisförmige Kontaktfläche 72 des Lagerelements 7. In weiteren Ausgestaltungen der Anordnung 1 können die Kontaktflächen 52, 91, 92 und 72 jeweils auch andere Geometrien aufweisen.

Außerdem kann in anderen Ausgestaltungen der Anordnung 1 das Gleitelement 9 auch außerhalb der Ausnehmung 51 der Lagerbuchse 5 angeordnet sein oder die Lagerbuchse 5 weist an einer dem Gleitelement 9 zugewandten Seite keine Ausnehmung auf, sodass zumindest das Gleitelement 9 stets zwischen der Lagerbuchse 5 und dem Lagerelement 7 angeordnet ist und eine Kopplung der Lagerbuchse 5 mit dem Lagerelement 7 realisiert. Ein Anordnen des Gleitelements 9 als Gleitscheibe innerhalb der Ausnehmung 51 der Lagerbuchse 5 ist unter anderem vorteilhaft für ein verbessertes Abstützen der Lagerbuchse 5 und des Federarms 13 der Schraubenfeder 11. Die Lagerbuchse 5 stützt sich an einer Außenwand der Gleitscheibe 9 ab und wird dadurch in Bezug auf Längsachse L stabilisiert. Dadurch, dass die Gleitscheibe 9 innerhalb der Ausnehmung 51 der Lagerbuchse 5 angeordnet ist, erstreckt sich die Lagerbuchse 5 weiter in Richtung des Lagerelements 7 und ermöglicht somit zusätzliche eine verbesserte Abstützung des Federarms 13.

Eine Rotation der Welle 3 zum Auf- und/oder Abwickeln des flexiblen Elements ist in dem illustrierten Ausführungsbeispiel dadurch realisiert, dass die Lagerbuchse 5 mittels der vorragenden Struktur 6 mit der Welle 3 gekoppelt ist. Die vorragende Struktur 6 ist beispielsweise eine zylinderförmige Erhebung, die sich ausgehend von der Außenkontur der Lagerbuchse 5 in Richtung außerhalb der Welle 3 durch die Wandung der Welle 3 erstreckt. Die Wandung der Welle 3 weist dann zum Beispiel an der entsprechenden Position eine Ausnehmung auf, die beispielsweise kongruent zu der vorragenden Struktur 6 ausgebildet ist und ein Durchdringen der vorragenden Struktur 6 ermöglicht. Alternativ oder zusätzlich sind auch andere kraft- und/oder form- und/oder stoffschlüssige Kopplungen zwischen der Lagerbuchse 5 und der Welle 3 möglich.

Das Ausführungsbeispiel in Figur 2 zeigt darüber hinaus einen Lagerzapfen 15, der sich von außerhalb der Welle 3 durch die Ausnehmung 51 der Lagerbuchse 5 und durch eine Ausnehmung 90 der Gleitscheibe 9 in eine Ausnehmung 71 des Lagerelements 7 erstreckt.

Der Lagerzapfen 15 weist eine stiftförmige Struktur auf, die die beispielsweise in die Ausnehmung 71 des Lagerelements 7 hineingepresst ist und eine form- und/oder kraftschlüssige Kopplung mit dem Lagerelement 7 realisiert. Darüber hinaus bestehen auch an dieser Position weitere alternative oder zusätzliche Möglichkeiten der Kopplung zwischen Lagerzapfen 15 und Lagerelement 7, sodass ein zuverlässiges und stabiles Wickelsystem ermöglicht wird. Außerdem weist der Lagerzapfen 15 im Bereich der Gleitscheibe 9 eine scheibenförmige Struktur auf, die sich im Wesentlichen senkrecht zu der stiftförmigen Struktur erstreckt und die Gleitscheibe 9 an einer der Lagerbuchse 5 zugewandten Seite stützt oder kontaktiert.

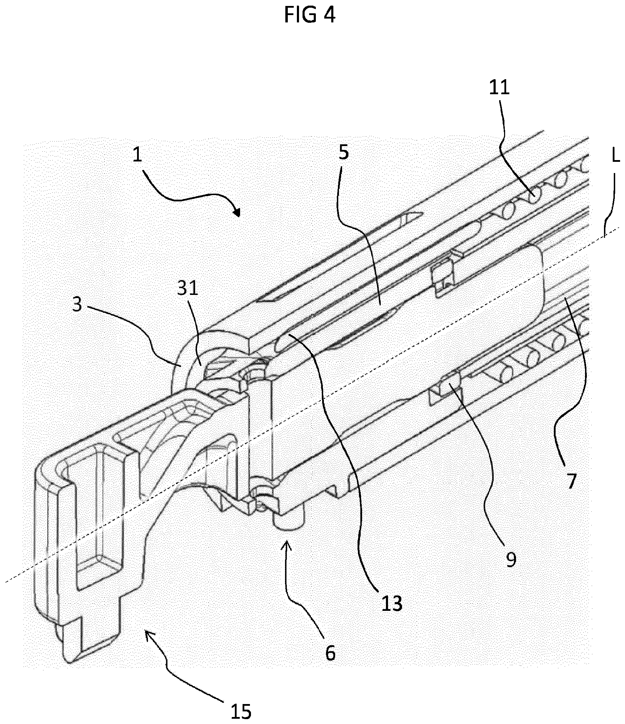

In den Figuren 2 und 4 ist jeweils nur eine Anordnung 1 auf einer Seite des Wickelsystems dargestellt. In Bezug auf eine symmetrische Ausgestaltung des Wickelsystems sind aber an beiden Enden der Welle 3 jeweils ein Lagerzapfen, eine Lagerbuchse und ein Gleitelement angeordnet, die jeweils einem Ende des Lagerelements 7 zugeordnet sind. Die Schraubenfeder 11 kann zum Beispiel als eine einzelne Schraubenfeder ausgebildet sein, die an beiden Enden jeweils einen Federarm aufweist, oder es sind zwei oder mehrere Antriebselemente oder Schraubenfedern vorgesehen, die eine zuverlässige Kopplung der jeweiligen Lagerbuchse mit dem Lagerelement 7 realisieren.

Eine Rotation der Welle 3 wird dann zum Beispiel dadurch realisiert, dass die Schraubenfeder 11 symmetrisch in der Mitte der Ausnehmung 31 der Welle 3 eingehängt ist und zwei außen gelagerte Lagerbuchsen 5 mit einem Torsions- oder Drehmoment beaufschlagt und diese aufgrund der Kopplung mittels zweier Federarme 13 zu einer Rotation veranlasst. Aufgrund der vorragenden Struktur 6 der jeweiligen Lagerbuchsen 5 wird auch die Welle in Rotation versetzt und ermöglicht somit ein zuverlässiges und geräuscharmes Auf- und/oder Abwickeln des flexiblen Elements.

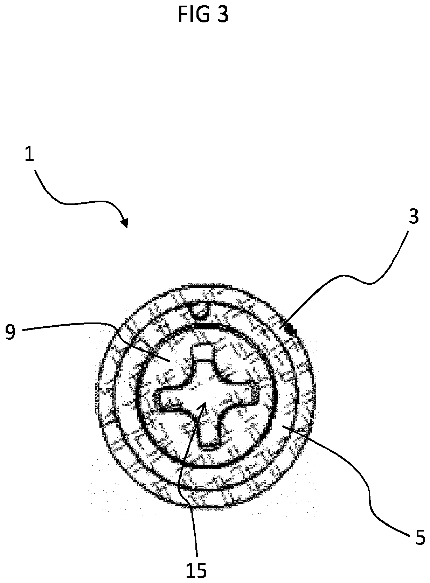

Figur 3 zeigt eine weitere Schnittdarstellung der in Figur 2 dargestellten Anordnung 1 und illustriert einen im Wesentlichen rotationssymmetrischen Aufbau der Anordnung 1 für ein Wickelsystem, der insbesondere in Bezug auf ein Auf- und/oder Abwickeln des flexiblen Elements nutzbringend ist. Die gezeigte Schnittdarstellung bezieht sich auf eine Ebene, die sich im Wesentlichen senkrecht zu der Ebene, der in Figur 2 gezeigten Schnittdarstellung, erstreckt, an einer Position der Ausnehmung 51 der Lagerbuchse 5. Außerhalb ist die Welle 3 angeordnet, welche kreisförmig die Lagerbuchse 5, die Gleitscheibe 9 und einen Teil des Lagerzapfens 15 umgibt.

Figur 4 zeigt eine perspektivische Ansicht der Anordnung 1, die beispielsweise das Ausführungsbeispiel aus den Figuren 2 und 3 darstellt. In dieser Ansicht ist unter anderem der im Wesentlichen rotationssymmetrische Aufbau der Ausgestaltung der Anordnung 1 zu erkennen. Darüber hinaus ist die Schraubenfeder 11 als kombinierte Zug- und Drehfeder ersichtlich, die einen verlängerte Federarm 13 aufweist, der an einer Außenkontur der Lagerbuchse 5 anliegt und in entsprechend ausgebildete Nut eingreift. Auf diese Weise wird die Lagerbuchse 5 in Richtung des Lagerelements gezogen und die Lagerbuchse 5, das Gleitelement 9 und das Lagerelement 7 gegeneinander verspannt.

### Bezugszeichenliste

- 1: Anordnung
- 3: Welle
- 4: Wandung Welle
- 5: Lagerbuchse
- 6: vorragende Struktur Lagerbuchse
- 7: Lagerelement
- 9: Gleitelement
- 11: Antriebselement
- 13: Federarm
- 15: Lagerzapfen
- 20: Fahrzeugdach
- 21: Dachfenster
- 23: Kontaktfläche Gleitelement
- 31: Ausnehmung Welle
- 51: Ausnehmung Lagerbuchse
- 52: Kontaktfläche Lagerbuchse
- 71: Ausnehmung Lagerelement
- 72: Kontaktfläche Lagerelement
- 90: Ausnehmung Gleitelement
- 91: erste Kontaktfläche Gleitelement
- 92: zweite Kontaktfläche Gleitelement

- L: Längsachse

## Patentansprüche

1. Rollosystem für ein Fahrzeugdach (20), umfassend eine Anordnung (1) und das Fahrzeugdach (20) eines Kraftfahrzeugs, wobei das Rollosystem ausgebildet ist zum Anordnen in einem hinteren Bereich des Kraftfahrzeugs, um ein in dem Fahrzeugdach (20) integriertes Dachfenster auf Wunsch zu verdunkeln und wieder freizugeben, und wobei die Anordnung (1) aufweist:
- eine Welle (3), die eine Ausnehmung (31) und eine Längsachse (L) aufweist, um die sie drehbar ausgebildet ist,
- eine Lagerbuchse (5), die eine Kontaktfläche (52) aufweist und die um die Längsachse (L) drehbar in der Ausnehmung (31) der Welle (3) angeordnet und mit der Welle (3) gekoppelt ist,
- ein Lagerelement (7), das eine Kontaktfläche (72) aufweist und das beabstandet zu der Lagerbuchse (5) in der Ausnehmung (31) der Welle (3) angeordnet ist,
- ein Gleitelement (9), das eine erste und eine zweite Kontaktfläche (91, 92) aufweist und das zwischen der Lagerbuchse (5) und dem Lagerelement (7) in der Ausnehmung (31) der Welle (3) angeordnet ist, und
- ein Antriebselement (11), das drehbar um die Längsachse (L) in der Ausnehmung (31) der Welle (3) angeordnet und mit der Lagerbuchse (5) gekoppelt ist und das dazu ausgebildet ist, mittels der Welle (3) ein Rollo auf- und/oder abzuwickeln, wobei das Antriebselement (11) eine Kraft auf die Lagerbuchse (5) in Richtung des Lagerelements (7) ausübt, sodass sich die Kontaktfläche (52) der Lagerbuchse (5) und die erste Kontaktfläche (91) des Gleitelements (9) sowie die Kontaktfläche (72) des Lagerelements (7) und die zweite Kontaktfläche (92) des Gleitelements (9) kontaktieren, so dass die Lagerbuchse (5), das Gleitelement (9) und das Lagerelement (7) gegeneinander verspannt sind.

2. Rollosystem nach Anspruch 1, bei der
Die Lagerbuchse (5) eine Ausnehmung (51) aufweist, in der das Gleitelement (9) angeordnet ist.

3. Rollosystem nach Anspruch 1 oder 2, bei der
das Antriebselement (11) zwischen dem Lagerelement (7) und einer Wandung (4) der Welle (3) angeordnet ist und eine Zugkraft auf die Lagerbuchse (5) ausübt.

4. Rollosystem nach einem der Ansprüche 1 bis 3, bei der
das Antriebselement (11) einen Federarm (13) aufweist, der mit der Lagerbuchse (5) gekoppelt ist, und mittels des Federarms (13) eine Zugkraft auf die Lagerbuchse (5) ausübt.

5. Rollosystem nach einem der Ansprüche 1 bis 4, bei der
das Gleitelement (9) scheibenförmig ausgebildet ist.

6. Rollosystem nach Anspruch 2 oder einem der Ansprüche 3 bis 5, sofern dieser auf Anspruch 2 rückbezogen ist, weiter umfassend
einen Lagerzapfen (15), der zur Kopplung der Anordnung (1) mit einem Kraftfahrzeug ausgebildet ist und der sich von außerhalb der Welle (3) in die Ausnehmung (51) der Lagerbuchse (5) und die Ausnehmung (31) der Welle (3) erstreckt.

7. Rollosystem nach Anspruch 6, bei der
- das Gleitelement (9) eine Ausnehmung (90) und das Lagerelement (7) eine Ausnehmung (71) aufweisen, und
- der Lagerzapfen (15) sich durch die Ausnehmung (51) der Lagerbuchse (5) und durch die Ausnehmung (90) des Gleitelements (9) in die Ausnehmung (71) des Lagerelements (7) erstreckt und mit diesem koppelt.

## Claims

1. Roller blind system for a vehicle roof (20), comprising an arrangement (1) and the vehicle roof (20) of a motor vehicle, wherein the roller blind system is configured for arrangement in a rear region of the motor vehicle for the purpose of darkening a roof window integrated in the vehicle roof (20), and rendering it clear again, as desired, and wherein the arrangement (1) has
- a shaft (3), which has a recess (31) and a longitudinal axis (L) about which it is rotatably configured,
- a bearing bush (5), which has a contact surface (52) and which is arranged rotatably about the longitudinal axis (L) in the recess (31) of the shaft (3) and is coupled to the shaft (3),
- a bearing element (7), which has a contact surface (72) and which is arranged at a distance from the bearing bush (5) in the recess (31) of the shaft (3),
- a sliding element (9), which has a first and a second contact surface (91, 92) and which is arranged between the bearing bush (5) and the bearing element (7) in the recess (31) of the shaft (3), and
- a drive element (11), which is arranged rotatably about the longitudinal axis (L) in the recess (31) of the shaft (3) and is coupled to the bearing bush (5) and which is configured to wind up and/or unwind a roller blind by means of the shaft (3), wherein the drive element (11) exerts a force on the bearing bush (5) in the direction of the bearing element (7), so that the contact surface (52) of the bearing bush (5) and the first contact surface (91) of the sliding element (9), as well as the contact surface (72) of the bearing element (7) and the second contact surface (92) of the sliding element (9), make contact with each other such that the bearing bush (5), the sliding element (9) and the bearing element (7) are braced relative to one another.

2. Roller blind system according to Claim 1, in which
the bearing bush (5) has a recess (51), in which the sliding element (9) is arranged.

3. Roller blind system according to Claim 1 or 2, in which
the drive element (11) is arranged between the bearing element (7) and a wall (4) of the shaft (3) and exerts a tensile force on the bearing bush (5).

4. Roller blind system according to one of Claims 1 to 3, in which
the drive element (11) has a spring arm (13), which is coupled to the bearing bush (5), and by means of the spring arm (13) exerts a tensile force on the bearing bush (5).

5. Roller blind system according to one of Claims 1 to 4, in which
the sliding element (9) is of disc-shaped configuration.

6. Roller blind system according to Claim 2 or one of Claims 3 to 5, where referred back to Claim 2, further comprising
a bearing journal (15), which is configured to couple the arrangement (1) to a motor vehicle and which extends from outside the shaft (3) into the recess (51) of the bearing bush (5) and the recess (31) of the shaft (3).

7. Roller blind system according to Claim 6, in which
- the sliding element (9) has a recess (90) and the bearing element (7) has a recess (71), and
- the bearing journal (15) extends through the recess (51) of the bearing bush (5) and through the recess (90) of the sliding element (9) into the recess (71) of the bearing element (7) and couples to the latter.

## Revendications

1. Système de store pour un toit de véhicule (20), comprenant un agencement (1) et le toit de véhicule (20) d'un véhicule automobile, le système d'enroulement étant réalisé pour être agencé dans une partie arrière du véhicule automobile afin d'occulter et de dégager à nouveau, à la demande, une fenêtre de toit intégrée dans le toit de véhicule (20), l'agencement (1) présentant :
- un arbre (3) qui comprend un évidement (31) et un axe longitudinal (L) autour duquel il est réalisé de manière rotative,
- un coussinet de palier (5) qui comprend une surface de contact (52) et qui est disposé de manière rotative autour de l'axe longitudinal (L) dans l'évidement (31) de l'arbre (3) et est accouplé à l'arbre (3),
- un élément de palier (7) qui présente une surface de contact (72) et qui est disposé dans l'évidement (31) de l'arbre (3) de manière espacée du coussinet de palier (5),
- un élément de glissement (9) qui présente une première et une deuxième surface de contact (91, 92) et qui est disposé entre le coussinet de palier (5) et l'élément de palier (7) dans l'évidement (31) de l'arbre (3), et
- un élément d'entraînement (11) qui est disposé de manière rotative autour de l'axe longitudinal (L) dans l'évidement (31) de l'arbre (3) et est accouplé au coussinet de palier (5) et est conçu pour, au moyen de l'arbre (3), enrouler et/ou dérouler un store, l'élément d'entraînement (11) exerçant une force sur le coussinet de palier (5) en direction de l'élément de palier (7) de telle sorte que la surface de contact (52) du coussinet de palier (5) et la première surface de contact (91) de l'élément de glissement (9) ainsi que la surface de contact (72) de l'élément de palier (7) et la deuxième surface de contact (92) de l'élément de glissement (9) viennent en contact, de sorte que le coussinet de palier (5), l'élément de glissement (9) et l'élément de palier (7) sont serrés les uns contre les autres.

2. Système de store selon la revendication 1, dans lequel le coussinet de palier (5) comprend un évidement (51) dans lequel l'élément de glissement (9) est disposé.

3. Système de store selon la revendication 1 ou 2, dans lequel l'élément d'entraînement (11) est disposé entre l'élément de palier (7) et une paroi (4) de l'arbre (3) et exerce une force de traction sur le coussinet de palier (5).

4. Système de store selon l'une quelconque des revendications 1 à 3, dans lequel l'élément d'entraînement (11) présente un bras de ressort (13) qui est accouplé au coussinet de palier (5), et au moyen duquel le bras de ressort (13) exerce une force de traction sur le coussinet de palier (5).

5. Système de store selon l'une quelconque des revendications 1 à 4, dans lequel l'élément de glissement (9) est réalisé en forme de disque.

6. Système de store selon la revendication 2 ou selon l'une quelconque des revendications 3 à 5, dans la mesure où elle se réfère à la revendication 2, comprenant en outre
un tourillon de palier (15), lequel est réalisé pour l'accouplement de l'agencement (1) à un véhicule automobile, et lequel s'étend depuis l'extérieur de l'arbre (3) dans l'évidement (51) du coussinet de palier (5) et l'évidement (31) de l'arbre (3).

7. Système de store selon la revendication 6, dans lequel
- l'élément de glissement (9) présente un évidement (90) et l'élément de palier (7) présente un évidement (71), et
- le tourillon de palier (15) s'étend à travers l'évidement (51) du coussinet de palier (5) et à travers l'évidement (90) de l'élément de glissement (9) dans l'évidement (71) de l'élément de palier (7) et s'accouple avec celui-ci.
